# EUROPEAN PATENT APPLICATION

(11) **EP 3 381 732 A1**
(43) Date of publication of application: **03.10.2018**
(21) Application number: 16868412.4
(22) Date of filing: 11.11.2016
(51) Int. Cl.: B60K 35/00, G02B 27/01, G09G 5/00, G09G 5/36, G09G 5/38

(54) **HEAD-UP DISPLAY**

(30) Priority: 25.11.2015 JP 2015229250
(71) Applicant: Nippon Seiki Co., Ltd., Nagaoka-shi, Niigata 940-8580 (JP)
(72) Inventor: MASUYA,Yuki, Nagaoka Niigata (JP)
(74) Representative: Jackson, Richard Eric
(86) International application number: PCT/JP2016/083487
(87) International publication number: WO 2017/090464

(57) **Abstract**

In this head-up display, which is capable of displaying virtual images having different display distances, visibility of the virtual images is ensured even when the position of the point of view changes. An imaginary first virtual image display surface 100, which is capable of displaying a first virtual image V1 on a surface, and an imaginary second virtual image display surface 200, which is tilted farther toward the horizontal direction than the first virtual image display surface 100 in a position so that at least a part of the imaginary second virtual image display surface 200 is farther from a viewer than the first virtual image display surface 100, and which is capable of displaying a second virtual image V2 on a surface, are generated. In accordance with a viewpoint position 300 of the viewer, the displays of the first virtual image V1 and/or the second virtual image V2 are changed so that the first virtual image V1 and the second virtual image V2 do not overlap.

## Description

### TECHNICAL FIELD

The present invention relates to a head-up display capable of generating a plurality of imaginary virtual image display surfaces capable of displaying a virtual image.

### BACKGROUND ART

The head-up display generates augmented reality (AR) that adds information to an actual scene and emphasizes a specific object in an actual scene by overlaying a superimposed image of a landscape (actual scene) ahead of an own vehicle, and contributes to safe and comfortable vehicle operation by accurately providing desired information while suppressing an eye movement of a viewer driving a vehicle as much as possible.

For example, Patent Literature 1 discloses a head-up display, which has two image display units, and generates a virtual image on two imaginary virtual image display surfaces by displaying an image on these image display units. By arranging the display surfaces of the first and second image display units at different angles with respect to a line of sight of a viewer, respectively, the head-up display makes the viewing angles of the two virtual image display surfaces generated by the first and second image display units different from each other. Specifically, the head-up display generates one virtual image display surface to be substantially perpendicular to s viewer's line of sight, and the other virtual image display surface to be more inclined in a horizontal direction than the other virtual image display surface. In other words, two virtual image display surfaces are not parallel, but have a predetermined angle. By thus generating two virtual image display surfaces to be inclined by a predetermined angle, when a virtual image is displayed on a respective virtual image display surface, a viewer can recognize the virtual image in three dimensions.

### CITATION LIST

### PATENT LITERATURE

Patent Literature 1: Japanese Unexamined Patent Application Publication No. 2008-268485

### SUMMARY OF THE INVENTION

### PROBLEMS TO BE SOLVED BY THE INVENTION

However, in the head-up display disclosed in Patent Literature 1, when the height of a viewer's viewpoint changes, a virtual image on one virtual image display surface visually recognized on a near side of the viewer and a virtual image on the other virtual image display surface visually recognized on a back side of the viewer overlap each other, and the visibility of the virtual image may be deteriorated.

An object of the present invention is to provide a head-up display capable of displaying a virtual image having a different display distance and capable of securing visibility of a virtual image even when a position of viewpoint changes.

### SOLUTION TO PROBLEM

The present invention adopts the following means in order to solve the above problem.

A head-up display of the present invention generates an imaginary first virtual image display surface capable of displaying a first virtual image on a surface, and an imaginary second virtual image display surface capable of displaying a second virtual image on a surface, at least a part of which is inclined more in a horizontal direction than the first virtual display surface in a position separated farther from a viewer than the first virtual image display surface. The head-up display inputs a viewpoint position of a viewer, changes a display of the first virtual image and/or the second virtual image in accordance with the viewpoint position so that the first virtual image and the second virtual image do not overlap each other, and ensures the visibility of the first virtual image and the second virtual image even when the viewpoint position changes.

The head-up display of the present invention generates an imaginary first virtual image display surface capable of displaying a first virtual image on a surface, and an imaginary second virtual image display surface, at least a part of which is located in a position separated farther from a viewer than the first virtual image display surface, and which is capable of displaying a second virtual image on a surface inclined more in a horizontal direction than the first virtual image display surface. The head-up display includes a viewpoint information acquisition unit for acquiring viewpoint information related to a viewpoint position of a viewer, and a display control unit that changes a display of the first virtual image and/or the second virtual image based on the viewpoint information acquired by the viewpoint information acquisition unit so that the first virtual image and the second virtual image do not overlap each other.

### EFFECT OF THE INVENTION

In a head-up display capable of displaying virtual images having different display distances, it is possible to ensure visibility of virtual images even when a position of a viewpoint changes.

### BRIEF DESCRIPTION OF THE DRAWINGS

FIG. 1 is a diagram showing a first virtual image display surface and a second virtual image display surface generated by a head-up display according to an embodiment of the present invention, and is a diagram for explaining an overlap area on a second virtual image display surface.
FIG. 2 is a diagram showing a first virtual image display surface and a second virtual image display surface generated by the head-up display of the embodiment, and is a diagram for explaining an overlap area on a first virtual image display surface.
FIG. 3 is a schematic diagram showing an example of a configuration of the head-up display of the embodiment.
FIG. 4 is a block diagram showing an electrical configuration of the head-up display of the embodiment.
FIG. 5 is a flowchart explaining the operation of the head-up display shown in FIG. 3.
FIG. 6 is a diagram showing a first virtual image display surface and a second virtual image display surface generated by a head-up display according to a modified example of the present invention, and is a diagram for explaining an overlap area on a second virtual image display surface.
FIG. 7 is a diagram showing a first virtual image display surface and a second virtual image display surface generated by a head-up display according to a modified example of the present invention, and is a diagram for explaining an overlap area on a first virtual image display surface.
FIG. 8 is a diagram showing an example of a state where a scene viewed from a driver's seat directed to the front of a vehicle and a virtual image displayed by the head-up display shown in FIG. 3 are visually recognized.

### MODE FOR CARRYING OUT THE INVENTION

It should be noted that the embodiments described below are used to facilitate understanding of the present invention and those skilled in the art will not be unduly limited by the embodiments in which the present invention is described below.

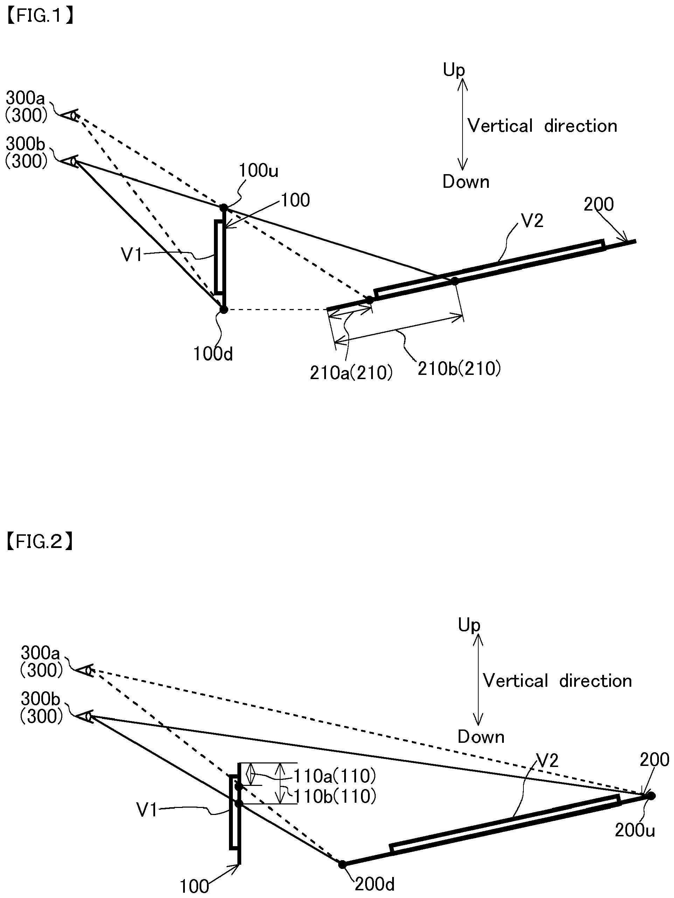

A HUD 1 of the present invention, as shown in FIGS. 1 and 2, generates an imaginary first virtual image display surface 100 capable of displaying a first virtual image V 1 on a surface, and an imaginary second virtual image display surface 200, which is located in a position away from a viewer than the first virtual image display surface 100, and which is capable of displaying a second virtual image V 2 on a surface inclined more in a horizontal direction than the first virtual image display surface 100.

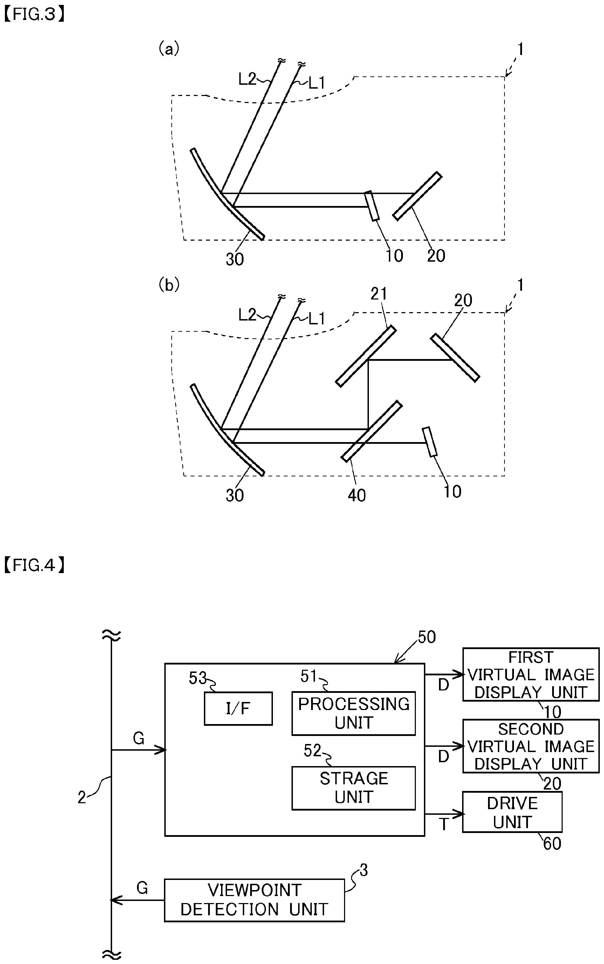

A configuration of the HUD of the embodiment will be described with reference to FIG. 3 that is a schematic diagram of a head-up display 1 (hereinafter referred to as HUD) of the embodiment.

The HUD 1 of the present embodiment, as shown in FIG. 3 (a), includes a first image display unit 10 for displaying a first image (not shown), a second image display unit 20 for displaying a second image (not shown), a projection unit 30 that projects a display light L1 of the first image displayed by the first image display unit 10 and a display light L2 of the second image displayed by the second image display unit 20 toward the outside of the HUD 1, and a display control unit 50 to be described later. The display surface of the first image display unit 10 corresponds to the first virtual image display surface 100 described later, and the first image displayed on the first image display unit 10 is visually recognized as a virtual image V1 on the first virtual image display surface 100. The display surface of the second image display unit 20 corresponds to the second virtual image display surface 200 described later, and the second image displayed on the second image display unit 20 is visually recognized as a virtual image V2 on the second virtual image display surface 200. Incidentally, innumerable display light based on images is emitted from the first image display unit 10 and the second image display unit 20, but in the drawings used for describing the embodiment, only an optical axis of a light flux of a display light directed from the first image display unit 10 to a viewer is shown as a first display light L1, and only an optical axis of a light flux of a display light directed from the second image display unit 20 to a viewer is shown as a second display light L2.

The first image display unit 10 and the second image display unit 20 are composed of, for example, a display device using a reflective display device such as a DMD and LCoS. A display surface of the first image display unit 10 is disposed closer to the projection unit 30 than a display surface of the second image display unit 20 so that an optical path length of the first display light L1 from the first image display unit 10 toward a viewer is shorter than an optical path length of the second display light L2 from the second image display unit 20 toward a viewer. As a result, the first virtual image display surface 100 corresponding to the first image display unit 10 is generated in a position closer to a viewer than the second virtual image display surface 200 corresponding to the second image display unit 20. Further, the angles at which the first virtual image display surface 100 and the second virtual image display surface 200 are generated are different depending on the installation angles of the first image display unit 10 and the second image display unit 20 in the HUD 1. The HUD 1 of the embodiment generates the second virtual image display surface 200 by inclining the second virtual image display surface 200 more in a horizontal direction than the first virtual image display surface 100. Specifically, for example, the first virtual image display surface 100 is generated to be perpendicular to a horizontal direction, and the second image display unit 20 is generated by inclining about 10 degrees from a horizontal direction.

Other than the above embodiments, the HUD 1 for generating the first virtual image display surface 100 and the second virtual image display surface 200 may include, as shown in FIG. 3 (b), an image synthesizing unit 40 in addition to the first image display unit 10, the second image display unit 20 and the projection unit 30 described above. The image synthesizing unit 40 shown in FIG. 3 (b) comprises a half mirror or a Dichroic mirror, transmits the first display light L1 from the first image display unit 10, reflects the second display light L2 from the second image display unit20, thereby directing the first display light L1 and the second display light L2 to the viewer side. Thus, even with the HUD 1 in FIG. 3 (b), it is possible to generate the first virtual image display surface 100 and the second virtual image display surface 200 as described above. As for a structure of the HUD 1, which generates the imaginary first virtual image display surface 100 capable of displaying the first virtual image V1 on a surface and the imaginary second virtual image display surface 200, which is located in a position farther from the viewer than the first virtual image display surface 100, and which is capable of displaying the second virtual image V2 on a surface inclined more in a horizontal direction than the first virtual image display surface 100, it is not limited to those shown in FIGS. 3 (a) and 3 (b), and a configuration of HUD capable of generating a plurality of virtual image display surfaces may be applied.

FIG. 1 is a diagram showing overlap areas 210 (210a, 210b), which are areas overlapping with the first virtual image display surface 100 on the second virtual image display surface 200 as viewed from positions 300 (300a, 300b) of respective viewpoints. Of the two dotted lines extending radially from a position 300a in FIG. 1, one dotted line indicates a line of sight directed from the position 300a to an upper end 100u of the first virtual image display surface 100, and the other dotted line indicates a line of sight directed from the position 300a to a lower end 100d of the first virtual image display surface 100. In other words, an area 210a on the second virtual image display surface 200 between the two dotted lines extended radially from the position 300a of the viewpoint shown in FIG. 1 indicates an overlap area 210 that is visually recognized overlapping with the first virtual image display surface 100. Further, when viewing from a position 300b of a viewpoint lower than the position 300a, the overlap area 210 overlapping with the first virtual image display surface 100 on the second virtual image display surface 200 is wider than the area 210a as viewed from the high viewpoint position 300a, as shown by the area 210b in FIG. 1.

FIG.2 shows overlap areas 110 (110a, 110b), which are areas overlapping with the second virtual image display surface 200 on the first virtual image display surface 100 as viewed from the position 300 (300a, 300b) of each viewpoint. Of the two dotted lines extending radially from a position 300a in FIG. 2, one dotted line indicates a line of sight directed from the position 300a to an upper end 200u of the second virtual image display surface 200, and the other dotted line indicates a line of sight directed from the position 300a to a lower end 200d of the second virtual image display surface 200. In other words, an area 110a on the first virtual image display surface 100 between the two dotted lines extended radially from the position 300a of the viewpoint shown in FIG. 2 indicates an overlap area 110 that is visually recognized overlapping with the second virtual image display surface 200. Further, when viewing from a position 300b of a viewpoint lower than the position 300a, the overlap area 210 overlapping with the second virtual image display surface 200 on the first virtual image display surface 100 is wider than the area 110a as viewed from the high viewpoint position 300a, as shown by the area 110b in FIG. 2.

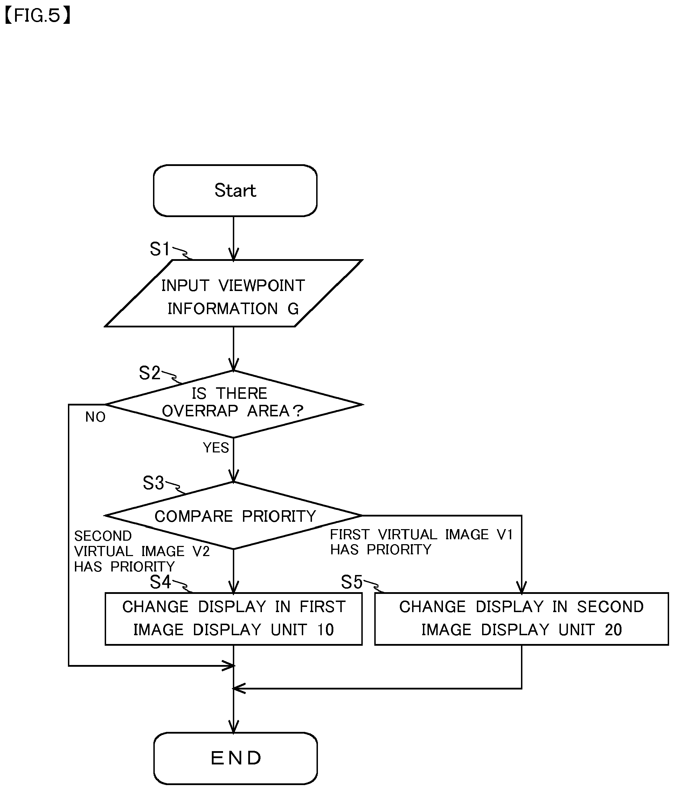

The HUD 1 of the present invention is controlled in accordance with the overlap area 110 on the first virtual image display surface 100 and the overlap area 210 on the second virtual image display surface 200, which change according to the position 300 of a viewpoint, so that the first virtual image V1 displayed on the first virtual image display surface 100 and the second virtual image V2 displayed on the second virtual image display surface 200 do not overlap each other. A control system of the HUD 1 will be described below with reference to FIGS. 4 and 5. FIG. 4 is a block diagram showing the electrical configuration of the HUD 1. FIG. 5 is a flow chart showing the operation of the HUD 1.

A display control unit 50 includes, for example, a processing unit 51, a storage unit 52, and an interface 53. The processing unit 51 is comprises, for example, a CPU or a RAM, the storage unit 52 is comprises, for example, a ROM, and the interface 53 comprises an input/output communication interface connected to a network 2. For example, the interface 53 can acquire vehicle information, viewpoint information G and the like regarding the viewpoint position 300 of a viewer via the network 2. The storage unit 52 can store data for generating image data D based on input vehicle information and the like, data D for correcting the image data D based the input viewpoint information G, or/and data for generating drive data T for driving a drive unit 60 described later. The processing unit 51 can read data from the storage unit 52 and execute a predetermined operation, thereby generating the image data D or/and the drive data T. Further, the interface 53 can acquire the viewpoint information G including information on the viewer's viewpoint position 300 from the viewpoint detection unit 3 via the network 2, for example, and has a function as a viewpoint information acquisition means described in the claims of the present invention. The display control unit 50 may be provided inside the HUD 100, and some or all of the functions may be provided on a vehicle side outside the HUD 100.

FIG. 5 is a flowchart showing an example of operation of the HUD 100 according to the embodiment. The HUD 100 starts processes described below, for example, when a vehicle 1 is activated, electric power is supplied to the electronic device of the vehicle 1, or a predetermined period has elapsed since the activation of the vehicle 1 or the power supply to the electronic device of the vehicle 1.

First, in step S1, the display control unit 50 inputs the viewpoint information G including information on the viewer's position 300 via the interface 53.

Next, in step S2, the display control unit 50 determines whether there is an area (overlap area 110, overlap area 210) where the first virtual image display surface 100 and the second virtual image display surface 200 overlap, when viewing from the viewpoint position 300 input in step S1. When it is determined that there is an area where the first virtual image display surface 100 and the second virtual image display surface 200 overlap (YES in step S2), the display control unit 50 goes to step S3 and executes processes from step S3 onward so that the first virtual image V1 and the second virtual image V2 are not visually recognized overlapping with each other. When it is determined that there is not an area where the first virtual image display surface 100 and the second virtual image display surface 200 overlap (NO in step S2), the display control unit 50 terminates the processing. Even in the case where the processing of the flow chart shown in FIG. 5 is completed, the display control unit repeats the processing from step S1 continuously or intermittently until the power supply to HUD 1 is cut off.

In step S3, the display control unit 50 determines (compares) priorities of the first virtual image V1 displayed in the overlap area 110 overlapping with the second virtual image display surface 200 on the first virtual image display surface 100 and the second virtual image V2 displayed in the overlap area 210 overlapping with the first virtual image display surface 100 on the second virtual image display surface. Regarding the determination of the priorities, the display control unit 50 may previously hold as table data in the storage unit 52, or may comprehensively determine each time from the viewpoints of risk potential and necessity of display based on traffic conditions. Images with a high priority include, for example, a guide route image for guiding a route by displaying a route to a destination over a lane, a white line recognition image for calling attention to departure from a lane by displaying it over a white line (lane marking) of a lane, and an inter-vehicle distance image for recognizing a forward vehicle to follow by displaying it over a vehicle to be recognized as a forward vehicle when using an adaptive cruise control (ACC) for controlling an own vehicle speed to follow a forward vehicle. Images with a low priority include, for example, a vehicle information image such as an engine speed and a travel distance, a warning image showing an own vehicle accident, a route guide image not overlapping with a lane.

In accordance with the priority in the first virtual image V1 and the second virtual image V2 determined in step S3, the display control unit 50 shifts to step S4 or step S5.

When the priority of the second virtual image V2 is determined higher than the first virtual image V1, the display control unit 50 shifts to step S4, and changes the display in the first image display unit 10 so that the first virtual image V1 displayed in the overlap area 110 on the first virtual image display surface 100 is not displayed in the overlap area 110. Specifically, the display control unit 50 changes the display position or/and the size of the first image as a target on the first image display unit 10, or hides the first image as a target on the first image display unit 10.

When the priority of the first virtual image V1 is determined higher than the second virtual image V2, the display control unit 50 shifts to step S5, and changes the display in the second image display unit 20 so that the second virtual image V2 displayed in the overlap area 210 on the second virtual image display surface 200 is not displayed in the overlap area 210. Specifically, the display control unit 50 changes the display position or/ and the size of the second image as a target on the second image display unit 20, or hides the second image as a target on the second image display unit 20. As described above, when the position 300 of the viewer's viewpoint is detected and visually recognized from the position 300 of the detected viewpoint, the overlap between the first virtual image V1 and the second virtual image V2 is estimated, and the display of either the first virtual image V1 or the second virtual image V2 viewed overlapping is adjusted, or the displays of both the first virtual image V1 and the second virtual image V2 are adjusted, whereby the visibilities of both the first virtual image V1 and the second virtual image V2 can be ensured even when the viewpoint position 300 changes.

### (Modification)

Modifications of the embodiment of the present invention will be described below.

Although the first image display unit 10 and the second image display unit 20 in the above embodiment are comprised of a display device using a reflective display device, they may be comprised of a laser scanning type display device that generates an image by scanning a laser beam, a transmission type display device using a liquid crystal display element or the like, a self-emitting type display device using an organic EL element, or the likes.

In addition, the first virtual image display surface 100 and the second virtual image display surface 200 are flat surfaces, but they may be curved surfaces. In addition, three or more virtual image display surfaces may be generated.

Further, in the above embodiment, the entire second virtual image display surface 200 is provided at a position farther from the viewer than the first virtual image display surface 100. However, a part of the second virtual image display surface 200 may be provided at a position farther from the viewer than the first virtual image display surface 100 and the other part may extend to a position closer to the viewer side than the first virtual image display surface 100.

Also, in the above embodiment, as shown in step S3 of FIG. 4, when there is an area where the first virtual image display surface 100 and the second virtual image display surface 200 overlap, the process for adjusting the display of the first virtual image V1 and the second virtual image V2 (processes from step S3 to step S5 in FIG. 4) is executed. However, the display adjustment process may be executed when the predetermined condition is satisfied. Specifically, the predetermined condition may be, for example, that the overlap area of the first virtual image display surface 100 and the second virtual image display surface 200 is wider than a predetermined area, or that the time during which the first virtual image display surface 100 and the second virtual image display surface 200 overlap lasts for longer than a predetermined time, or that the first virtual image V1 and the second virtual image V2 of prescribed specific contents overlap, and the likes.

Further, in the above embodiment, as shown in step S3 in FIG. 4, the priorities in the first virtual image V1 and the second virtual image V2 are determined. However, the priority determination process may be omitted by previously setting which of the first image display unit 10 and the second image display unit 20 is to be changed.

Further, in the above embodiment, in the processes shown in steps S4 and S5 in FIG. 4, the display control unit 50 makes the virtual image V with a low priority not to overlap the other virtual image V by changing the display position or/and the size of the first image (the second image) as a target on the first image display unit 10 (the second image display unit 20), or by hardening the first image (the second image) as a target on the first image display unit 10 (the second image display unit 20). However, the other methods may be used to prevent overlapping of the first virtual image V1 visible on the first virtual image display surface 100 and the second virtual image V2 visible on the second virtual image display surface 200. Specifically, the position of the first image display unit 10 or the position of the second image display unit 20 in the HUD 1 may be changed by the drive unit 60. Further, in the HUD 1 using the image synthesizing unit 40 as shown in FIG. 3 (b), by driving the drive unit 60 to move or/and rotate the image synthesizing unit 40, the relative position of the second virtual image display surface 200 with respect to the position of the first virtual image display surface 100 may be moved.

Furthermore, the HUD 1 may be provided with an angle adjustment unit (not shown) capable of adjusting the angle at which the first image display unit 10 or/and the second image display unit 20 are disposed in the HUD 1, and may adjust the angle between the first virtual image display surface 100 and the second virtual image display surface 200 by adjusting the relative angle between the first image display unit 10 and the second image display unit 20 based on the driving of the angle adjustment unit. As a result, the angle between the first virtual image display surface 100 and the second virtual image display surface 200 is variable, enabling more rich three-dimensional expression. In such a configuration, the display control unit 50 corrects the adjustment amount according to the angle adjustment amount of the angle adjustment unit so that the first virtual image and the second virtual image do not overlap.

Still further, in the above embodiment, the area where the first virtual image display surface 100 and the second virtual image display surface 200 overlap when viewed from the viewpoint position 300 of the viewer is determined to be the overlap area 110 of the first virtual image display surface 100 and the overlap area 210 of the second virtual image display surface 200, and the the first virtual image V1 or/and the second virtual image V2 are controlled not to be displayed in these overlap area 110 and 210. However, the manner of determining the overlap area 110 on the first virtual image display surface 100 and the overlap area 210 on the second virtual image display surface 200 is not limited to them.

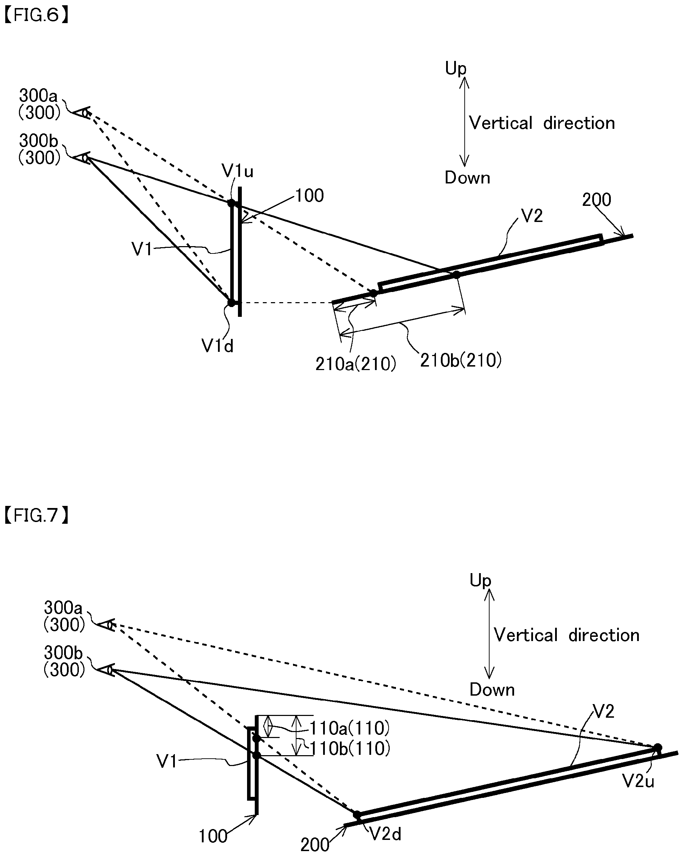

FIG. 6 is a diagram showing the overlap area 210 (210a, 210b) that is an area of overlapping with the first virtual image V1 on the first virtual image display surface 100 in the second virtual image display surface 200 when viewed from the position 300 (300a, 300b) of each viewpoint. Of the two dotted lines extending radially from a position 300a in FIG. 6, one dotted line indicates a line of sight directed from the position 300a to an upper end V1u of the first virtual image V1 displayed on the first virtual image display surface 100, and the other dotted line indicates a line of sight directed from the position 300a to a lower end V1d of the first virtual image V1 displayed on the first virtual image display surface 100. In other words, the area 210a on the second virtual image display surface 200 between the two dotted lines extended radially from the position 300a of the viewpoint shown in FIG. 6 indicates the overlap area 210 visually recognized overlapping with the first virtual image V1 displayed on the first virtual image display surface 100. The display control unit 50, as shown in FIG. 6, may determine the area of the second virtual image display surface 200 overlapping with the first virtual image V1 on the first virtual image display surface 100 to be the overlap area 210.

FIG. 7 is a diagram showing the overlap area 110 (110a, 110b) that is an area of overlapping with the second virtual image V2 on the second virtual image display surface 200 in the first virtual image display surface 100 when viewed from the position 300 (300a, 300b) of each viewpoint. Of the two dotted lines extending radially from a position 300a in FIG. 7, one dotted line indicates a line of sight directed from the position 300a to an upper end V2u of the second virtual image V2 displayed on the second virtual image display surface 200, and the other dotted line indicates a line of sight directed from the position 300a to a lower end V2d of the second virtual image V2 displayed on the second virtual image display surface 200. That is, the area 110a on the first virtual image display surface 100 between the two dotted lines extended radially from the position 300a of the viewpoint shown in FIG. 7 indicates the overlap area 210 visually recognized overlapping with the second virtual image V2 displayed on the second virtual image display surface 200. The display control unit 50, as shown in FIG. 7, may determine the area of the first virtual image display surface 100 overlapping with the second virtual image V2 on the second virtual image display surface 200 to be the overlap area 110.

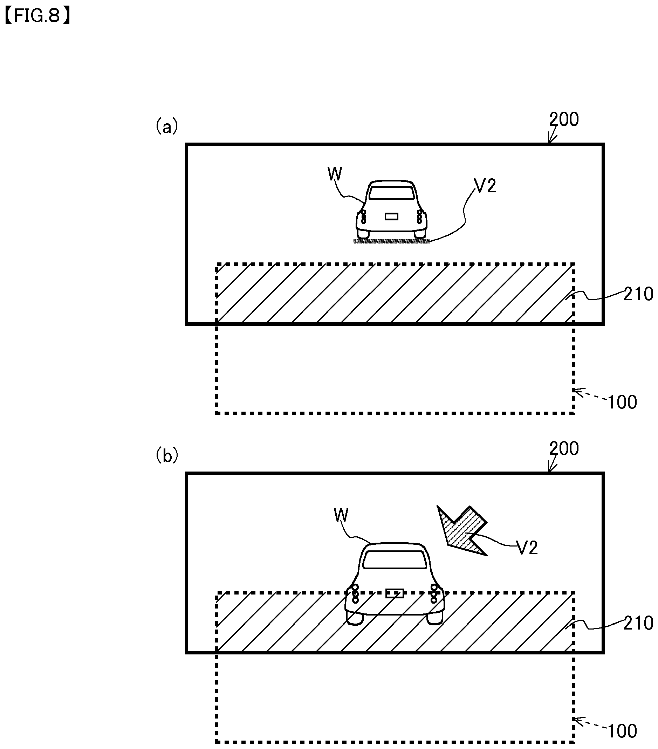

Further, the display control unit 50 may change the display mode of the first image (the second image) when changing the display position or size of the first image (the second image) as a target on the first image display unit 10 (the second image display unit 20) so that the first virtual image V1 and the second virtual image V2 are not visually recognized overlapping with each other. That is, when changing the display position or the size of the first virtual image V1 (the second virtual image V2), the display control unit 50 may change the display manner of the first virtual image V1 (the second virtual image V2). This will be described with reference to FIG. 8. FIG. 8 is a diagram showing a landscape visually recognized by a viewer when facing forward, and is a diagram for explaining a change in the display mode of the second virtual image V2 prompting attention to the forward vehicle W. FIG. 8 (a) shows an example displaying a linear second virtual image V2 visible below the forward vehicle W. When the forward vehicle W approaches from the state shown in FIG. 8 (a), the display control unit 50 of the embodiment moves the display position of the second virtual image V2 displayed below the forward vehicle W to the outside of the overlap area 210 overlapping with the first virtual image display surface 100 on the second virtual image display surface 200, as shown in FIG. 8 (b), and changes the display mode (form) of the second virtual image V2 from a linear shape indicating the position of the forward vehicle W to an arrow shape indicating the forward vehicle W. Specifically, the change in the display mode of the first virtual image V1 (the second virtual image V 2) includes, for example, a change in shape, a change in display color, a change in information format such as changing from graphic information to character information, and a change in expression form such as changing from moving image to still image.

### INDUSTRIAL APPLICABILITY

The present invention is applicable to a head-up display for generating a virtual image, and is particularly suitable for a head-up display to be mounted on a vehicle.

### DESCRIPTION OF REFERENCE NUMERALS

- 1: HUD (Head-up display)
- 2: Network
- 3: Viewpoint detection unit
- 10: First virtual image display unit
- 20: Second virtual image display unit
- 30: Projection unit
- 40: Image synthesizing unit
- 50: Display control unit
- 60: Drive unit
- 100: First virtual image display surface
- 110: Overlap area
- 200: Second virtual image display surface
- 210: Overlap area
- 300: Position of viewpoint
- G: Viewpoint information
- L1: First display light
- L2: Second display light
- V1: First virtual image
- V2: Second virtual image

## Claims

1. A head-up display, which generates an imaginary first virtual image display surface capable of displaying a first virtual image on a surface, and an imaginary second virtual image display surface, at least a part of which is located in a position farther from a viewer than the first virtual image display surface, and which is capable of displaying a second virtual image on a surface inclined more in a horizontal direction than the first virtual image display surface, the head-up display comprising:
a viewpoint information acquisition unit that acquires a viewpoint information related to a viewpoint position of a viewer, and
a display control unit that changes a display of the first virtual image or/and the second virtual image based on the viewpoint information acquired by the viewpoint information acquisition unit so that the first virtual image and the second virtual image do not overlap.

2. The head-up display according to claim 1, further comprising:
a first image display unit for displaying a first image that is a base of the first virtual image; and
a second image display unit for displaying a second image that is a base of the second virtual image,
wherein the display control unit changes a display position or/and a size of the first image, or a display position or/and a size of the second image so that the first virtual image and the second virtual image do not overlap.

3. The head-up display according to claim 1, further comprising:
a first image display unit for displaying a first image that is a base of the first virtual image; and
a second image display unit for displaying a second image that is a base of the second virtual image,
wherein the display control unit changes a position of the first image display unit or a position of the second image display unit so that the first virtual image and the second virtual image do not overlap.

4. The head-up display according to claim 1, further comprising:
a first image display unit for displaying a first image that is a base of the first virtual image;
a second image display unit for displaying a second image that is a base of the second virtual image;
a transmission/reflection unit, which transmits light based on the image emitted from one of the first image display unit and the second image display unit, and reflects light based on the image emitted from the other; and
a drive unit for moving or/and rotating the transmission/reflection unit,
wherein the display control unit controls the drive unit so that the first virtual image and the second virtual image do not overlap.

5. The head-up display according to any one of claims 1 to 4, further comprising an angle adjustment unit capable of adjusting an angle between the first virtual image display surface and the second virtual image display surface,
wherein the display control unit corrects an adjustment amount according to an angle adjustment amount of the angle adjustment unit so that the first virtual image and the second virtual image do not overlap.
